# EUROPEAN PATENT SPECIFICATION

(11) **EP 4 158 867 B1**
(45) Date of publication and mention of the grant of the patent: **09.10.2024**
(21) Application number: 20733309.7
(22) Date of filing: 22.06.2020
(51) Int. Cl.: H04W 8/02, H04L 65/1016

(54) **APPLICATION FUNCTION NODE, ACCESS AND MOBILITY MANAGEMENT FUNCTION NODE, SYSTEM AND METHODS IN A COMMUNICATIONS NETWORK**
ANWENDUNGSFUNKTIONSKNOTEN, ZUGANGS- UND MOBILITÄTSVERWALTUNGSFUNKTIONSKNOTEN, SYSTEM UND VERFAHREN IN EINEM KOMMUNIKATIONSNETZWERK
NOEUD DE FONCTION D'APPLICATION, NOEUD DE FONCTION DE GESTION D'ACCÈS ET DE MOBILITÉ, SYSTÈME ET PROCÉDÉS DANS UN RÉSEAU DE COMMUNICATION

(30) Priority: 01.06.2020 EP 20382465
(43) Date of publication of application: 05.04.2023
(73) Proprietor: Telefonaktiebolaget LM ERICSSON (PUBL), 16483 Stockholm (SE)
(72) Inventor: PEREZ MARTINEZ, Alfonso de Jesus, 28660 Madrid (ES); ALVAREZ DOMINGUEZ, Rodrigo, 280 16 Madrid (ES); MUÑOZ DE LA TORRE ALONSO, Miguel Angel, 280 02 Madrid (ES); PUENTE PESTAÑA, Miguel Angel, 280 07 Madrid (ES)
(74) Representative: Ericsson
(86) International application number: PCT/EP2020/067324
(87) International publication number: WO 2021/244762

(56) References cited:
- US-A1- 2018 270 778
- "3rd Generation Partnership Project; Technical Specification Group Core Network and Terminals; 5G System; Access and Mobility Management Services; Stage 3 (Release 15)", 2 May 2018 (2018-05-02), XP051448966, Retrieved from the Internet <URL:http://www.3gpp.org/ftp/tsg%5Fct/WG4%5Fprotocollars%5Fex%2DCN4/TSGCT4%5F84%5FKunMing/Docs/> [retrieved on 20180502]

## Description

### TECHNICAL FIELD

Embodiments herein relate to an application function node, an access and mobility management function node, a system and methods therein. In particular, they relate to handling a data session in a communication network.

### BACKGROUND

In a typical wireless communication network, user equipment (UE), also known as wireless communication devices, mobile stations, stations (STA) and/or wireless devices, communicate via a Radio Access Network (RAN) with one or more core networks belonging to different network operators. The RAN covers a geographical area which is divided into areas or cell areas, with each area or cell area being served by a radio network node, e.g., a Wi-Fi access point or a Radio Base Station (RBS), which in some networks may also be called, for example, a NodeB, eNodeB or a gNodeB. The area or cell area is a geographical area where radio coverage is provided by the radio network node. The radio network node communicates over an air interface operating on radio frequencies with the UE within range of the radio network node.

A Universal Mobile Telecommunications System (UMTS) is a third generation telecommunication network, which evolved from the second generation (2G) Global System for Mobile Communications (GSM). The UMTS Terrestrial Radio Access Network (UTRAN) is essentially a RAN using Wideband Code Division Multiple Access (WCDMA) and/or High Speed Packet Access (HSPA) for user equipment. In a forum known as the Third Generation Partnership Project (3GPP), telecommunications suppliers propose and agree upon standards for third generation networks and UTRAN specifically, and investigate enhanced data rate and radio capacity. In some RANs, e.g. as in UMTS, several radio network nodes may be connected, e.g., by landlines or microwave, to a controller node, such as a Radio Network Controller (RNC) or a Base Station Controller (BSC), which supervises and coordinates various activities of the plural radio network nodes connected thereto. The RNCs are typically connected to one or more core networks.

Specifications for the Evolved Packet System (EPS) have been completed within the 3GPP and this work continues in the coming 3GPP releases. The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access technology wherein the radio network nodes are directly connected to the EPC core network rather than to RNCs. In general, in E-UTRAN/LTE the functions of an RNC are distributed between the radio network nodes, e.g. eNodeBs in LTE, and the core network. As such, the RAN of an EPS has an essentially "flat" architecture comprising radio network nodes which can be connected directly to one or more core networks, i.e. they do not need to be connected to the core via RNCs.

With the emerging 5G technologies such as New Radio (NR), the use of a large number of transmit- and receive-antenna elements is of great interest as it makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify received signals coming from a selected direction or directions, while suppressing received unwanted signals coming from other directions.

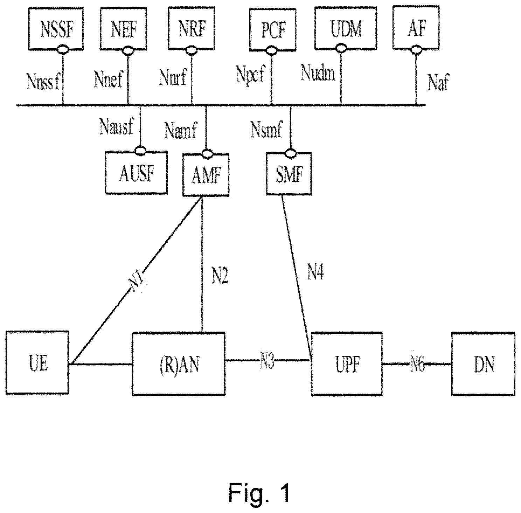

**Fig. 1** depicts various nodes in a 5G reference network architecture as defined by 3GPP. Some architectural nodes and aspects in Fig. 1 that are relevant to this description include: Application Function (AF), Network Exposure Function (NEF), Policy Control Function (PCF), Session Management Function (SMF), User Plane Function (UPF) and Access and Mobility management Function (AMF).

The Application Function (AF) may interact with the 3GPP Core Network, and specifically when referred to in this disclosure, the AF may provision information to a network operator and to subscribe to certain events happening in an operator's network.

The Network Exposure Function (NEF) may support different functionality and as mentioned in this disclosure, the NEF may act as an entry point into the operator's network, so that the AF may interact with the 3GPP Core Network through the NEF.

The Policy Control Function (PCF) may support unified policy framework to govern the network behavior. For example in this disclosure, the PCF may provide PCC rules to the SMF.

The Session Management Function (SMF) may support different functionality, e.g. in this disclosure, the SMF may configure the UPF, e.g. for event reporting. The User Plane Function (UPF) may support handling of user plane traffic based on rules received from the SMF. For example in this disclosure, the UPF may handle packet inspection and different enforcement actions, e.g. event detection and reporting).

The AMF may receive all connection and session related information from the UE, e.g. via interface N1 or N2, but the AMF is responsible mainly for handling connection and mobility management tasks.

3GPP TS 29.518 defines the services offered by the AMF to other Network Functions (NF).

A Network Data Analytics Function (NWDAF) may represent an operator managed network analytics logical function. The NWDAF is part of the architecture specified in 3GPP TS 23.501 and may use various mechanisms and interfaces specified for 5GC and Operations Administration and Maintenance (OAM).

The NWDAF may interact with different entities for different purposes such as:
- Data collection based on event subscription, provided by the AMF, SMF, PCF, Unified Data Management (UDM), AF directly or via NEF, and OAM;
- Retrieval of information from data repositories, e.g. from a Unified Data Repository (UDR) via UDM for subscriber-related information;
- Retrieval of information about NFs e.g. Network Repository Function (NRF) for NF-related information, and Network Slice Selection Function (NSSF) for slice-related information; and
- On demand provision of analytics to consumers.

It will now be described how optimization of user plane traffic can be addressed according to existing procedures.

There are multiple traffic algorithms to optimize the user plane traffic payload which contribute to improve the Quality of Experience (QoE) and ensure the required Quality of Service (QoS):
- Transmission Control Protocol (TCP) optimization: Most of the applications today are based on TCP transport, currently the TCP traffic presence is beyond 90% in mobile broadband networks. The TCP was developed in the 70s and was originally designed for wired communication and not for wireless communications. TCP may thus not be suitable for wireless networks, e.g. transmission errors are usually handled by the protocol as congestion events. Due to the above, different improvements to the TCP have been proposed, e.g. improved TCP congestion control algorithms such as TCP Cubic, Google's BBR, solutions based on TCP Proxy at the network side, AQM based solutions like CoDel, transparent solutions based on TCP split connection such as TCP ACK regulator or transparent buffer, etc. Most TCP optimizations aim for improved user experience by increasing TCP throughput, especially for high demanding services, as video streaming.
- Domain Name System (DNS) optimization. DNS requests are required for every type of traffic. DNS optimizers can improve the time elapsed to get content.
- Optimizers to ensure single user peak throughput for Augmented Reality (AR) applications, as high throughput may typically be needed for supporting AR applications.
- Quick UDP Internet Connections (QUIC) optimization is similar to TCP optimization but tries to improve the QUIC throughput.

Some available congestion mechanisms include: TCP Cubic, BBR, TCP Reno, TCP New Reno, TCP Tahoe and Yeah.

The above-mentioned 5G New Radio (NR) will now be discussed.

Previous releases, e.g. 4G, 3G, 2G, can be useful in the same portions of the spectrum, e.g. with reorganized frequency bands. The 5G frequency band plans are more complex, as the frequency spectrum for sub-6 GHz 5G spans from 450 MHz to 6 GHz, and millimeter-wave 5G frequencies span from 24.250 GHz to 52.600 GHz, and also include unlicensed spectrum.

According to 3GPP TS 38.101-3 the frequency ranges in which NR can operate according to this version of the specifications are identified as shown in Table 1 below.

**Table 1: Definition of frequency ranges**

| **Frequency range designation** | **Corresponding frequency range** |
|---|---|
| FR1 | 410 MHz - 7125 MHz |
| FR2 | 24250 MHz - 52600 MHz |

Accordingly, the congestion control schemes in prior art are not completely equipped to handle the highly volatile millimetre Wave (mmWave). The mmWawe spectrum refers to a band of spectrum between 30 GHz and 300 GHz channels. A common congestion control protocol that can be used for most of the expected data traffic is TCP Cubic. TCP Cubic treats packet loss as the signal for congestion in the network. When introducing link outages and capacity variations, which are fairly common in mmWave channels, TCP Cubic fails. When bottleneck buffers are large, loss-based congestion control, like TCP Cubic, keeps the buffers full, causing so-called buffer bloat, and when the buffers are small, loss-based congestion control can further reduce throughput by multiplicative decrease depending on packet loss. If a greater amount of packet loss occurs, throughput will be reduced.

The role and purpose of congestion control is to regulate the amount of injected traffic in the network according to its congestion state. However, in wireless communications, traditional congestion control protocols, such as TCP New Reno, are unable to differentiate between losses attributed to congestion and those attributed to transmission errors caused by a decay in channel quality.

Radio Link Control (RLC) buffer size may scale proportionally to Bandwidth-Delay Product (BDP) to achieve maximum TCP goodput, i.e. throughput of useful data. However, it is very challenging to properly dimension the buffers for mmWave links, given the rapid bandwidth variations between Line-Of-Sight (LOS) and Non-Line-Of-Sight (NLOS) conditions, and to protect from link losses without introducing buffer bloat.

US 2018/270778 A1 relates to AF protocol data unit (PDU) session management and subscription procedures. A method for PDU session management includes initiating a PDU session for an AF within an application server (AS) that is not part of a cellular network and sending configuration information to a network exposer function (NEF) to communicate directly with a network function (NF) of the cellular network to provide services for the PDU session. The method additionally includes receiving authorization from the NEF and communicating directly with the cellular network NF to provide the PDU services during the PDU session.

### SUMMARY

The present invention is defined by the subject-matter of independent claims 1, 5, 10, 12 and 14 that enables how to handle communication in a communication network in an efficient manner. Further detailed embodiments are defined in the dependent claims.

According to a first aspect of embodiments herein, the object is achieved by a method performed an AF node for handling a data session for a UE in a communication network. The AF node obtains information about usage of a first frequency for the UE from an AMF node. The AF node then applies a first congestion mechanism based on the obtained information about usage of the first frequency. The AF node further obtains information about usage of a second frequency for the UE from the AMF node. The AF node then further applies a second congestion mechanism in response to the obtained information about usage of the second frequency.

According to another aspect of embodiments herein, the object is achieved by a method performed by an AMF node for handling a data session for a UE in a communication network. The AMF node provides information about usage of a first frequency for the UE to an AF node. The AMF node then detects that usage of the frequency of the UE changes. The AMF node further provides information about usage of a second frequency for the UE to the AF node.

According to yet another aspect of embodiments herein, the object is achieved by an AF node for handling a data session for a UE in a communication network. The AF node is configured to obtain information about usage of a first frequency for the UE from an AMF node. The AF node is further configured to apply a first congestion mechanism based on the obtained information about usage of the first frequency. The AF node is further configured to obtain information about usage of a second frequency for the UE from the AMF node. The AF node is further configured to apply a second congestion mechanism in response to the obtained information about usage of the second frequency.

According to still another aspect of embodiments herein, the object is achieved by an AMF node for handling a data session of a UE in a communication network. The AMF node is configured to provide information about usage of a first frequency for the UE to an AF node. The AMF node is further configured to detect that usage of the frequency of the UE changes. The AMF node is further configured to provide information about usage of a second frequency for the UE to the AF node.

According to another aspect of embodiments herein, the object is achieved by a system for handling a data session for a UE in a communication network.

It is furthermore provided herein a computer program product comprising instructions, which, when executed on at least one processor, cause the at least one processor to carry out the method above, as performed by the network node or the UE. It is additionally provided herein a computer-readable storage medium, having stored thereon a computer program product comprising instructions which, when executed on at least one processor, cause the at least one processor to carry out the method according to the method above, as performed by the network node or the UE.

With the realisation that by obtaining information about usage of a first frequency for the UE from an AMF node, the AF node can apply a first congestion mechanism based on the obtained information about usage of the first frequency. By obtaining information about usage of a second frequency for the UE from the AMF node, the AF node can apply a second congestion mechanism in response to the obtained information about usage of the second frequency. Thereby the communication in the wireless communications network in handled in an efficient matter.

### BRIEF DESCRIPTION OF THE DRAWINGS

Examples of embodiments herein are described in more detail with reference to attached drawings in which:
- Fig. 1: is a schematic overview depicting a 5G reference network architecture;
- Fig. 2: is a schematic block diagram illustrating embodiments of a communications network;
- Fig. 3: is a combined signalling scheme and flowchart according to some embodiments herein;
- Fig. 4: is a flowchart depicting embodiments of a method in an application function node;
- Fig. 5: is a flowchart depicting embodiments of a method in an access and mobility management node;
- Fig. 6: is a combined signalling scheme and flowchart according to some embodiments herein;
- Figs. 7A and 7B: are combined signalling schemes and flowcharts according to some embodiments herein;
- Fig. 8: is a schematic block diagram illustrating embodiments of an application function node;
- Fig. 9: is a schematic block diagram illustrating embodiments of an access and mobility management function node;
- Fig. 10: is a schematic block diagram illustrating embodiments of a system;
- Fig. 11: schematically illustrates a telecommunication network connected via an intermediate network to a host computer;
- Fig. 12: is a generalized block diagram of a host computer communicating via a base station with a user equipment over a partially wireless connection; and
- Figs. 13 to 16: are flowcharts illustrating methods implemented in a communication system including a host computer, a base station and a user equipment.

### DETAILED DESCRIPTION

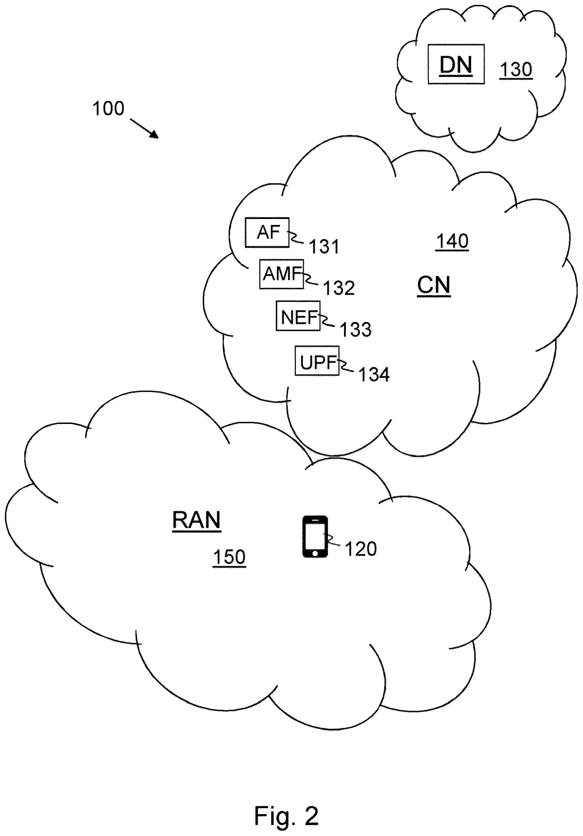

**Fig. 2** is a schematic overview depicting **a communications network 100** wherein embodiments herein may be implemented. The communication network 100 is able to provide wireless services for communication devices e.g. a **User Equipment (UE) 120,** such as a mobile station, a non-access point (non-AP) STA, a STA, a wireless device and/or a wireless terminal. It should be understood by those skilled in the art that "UE" is a non-limiting term which means any terminal, wireless communication terminal, user equipment, Machine Type Communication (MTC) device, Internet of Things operable device, Device to Device (D2D) terminal, mobile device e.g. smart phone, laptop, mobile phone, sensor, relay, mobile tablets or any device communicating within a cell or service area.

Network nodes operate in the core network, such as **an Application Function node (AF) 131, an Access and Mobility management Function node (AMF) 132, a Network Exposure Function node (NEF) 133 and a User Plane Function (UPF) node 134.** These nodes have basically the following functions and tasks.

The AF node 131 may support application influence on traffic routing, accessing NEF, interaction with policy framework for policy control.

The AMF node 132 may support termination of Non-access stratum (NAS) signalling, NAS ciphering and integrity protection, registration management, connection management, mobility management, access authentication and authorization and security context management.

The NEF node 133 may support exposure of capabilities and events, secure provision of information from external application to 3GPP network and translation of internal/external information.

The UPF node 134 may support packet routing and forwarding, packet inspection, Quality of Service (QoS) handling and may be an anchor point for intra- and inter-RAT mobility.

There are also network nodes, in addition to those cited above, for providing radio coverage over a geographical area by means of antenna beams. The geographical area may be referred to as a cell, a service area, beam or a group of beams. These network nodes may in this case be a transmission and reception point e.g. a radio access network node such as a base station, e.g. a radio base station such as a NodeB, an evolved Node B (eNB, eNode B), an NR Node B (gNB), a base transceiver station, a radio remote unit, an Access Point Base Station, a base station router, a transmission arrangement of a radio base station, a stand-alone access point, a Wireless Local Area Network (WLAN) access point, an Access Point Station (AP STA), an access controller, a UE acting as an access point or a peer in a Device to Device (D2D) communication, or any other network unit capable of communicating with a UE within the cell 11 served by the radio network node 110 depending e.g. on the radio access technology and terminology used.

The procedures and activities according to embodiments herein are chiefly performed by the AF node 131 and the AMF node 132, as described herein. The communications network 100 may use 5G NR for radio access but may further use a number of other different technologies, such as, Wi-Fi, (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

The communication network 100 comprises one or more **CNs 140** and one or more **RANs 150.** The UE 120 is connected via one or more RANs 150, to the one or more CNs 140.

As an alternative, a Distributed Node (DN) and functionality, e.g. comprised in a cloud 130 as shown in Fig. 2 may be used for performing or partly performing the methods.

In an example scenario of the handling of a data session for the UE 120 in the communication network 100 the AF node 131 may subscribe to changes in the radio frequency by subscribing to radio frequency events in the AMF node 132 through the NEF node 133. Radio frequency events may relate to access mobility of the UE 120 such as location changes, the UE 120 moving in or out of a subscribed area of interest, time zone changes, access type changes, registration state changes, connectivity state changes, UE 120 loss of communication and UE 120 reachability status. The AMF node 132 may thereby send information about those events to the AF node 131, via the NEF node 133, so that the AF node 131 can apply the corresponding congestion window based on this information.

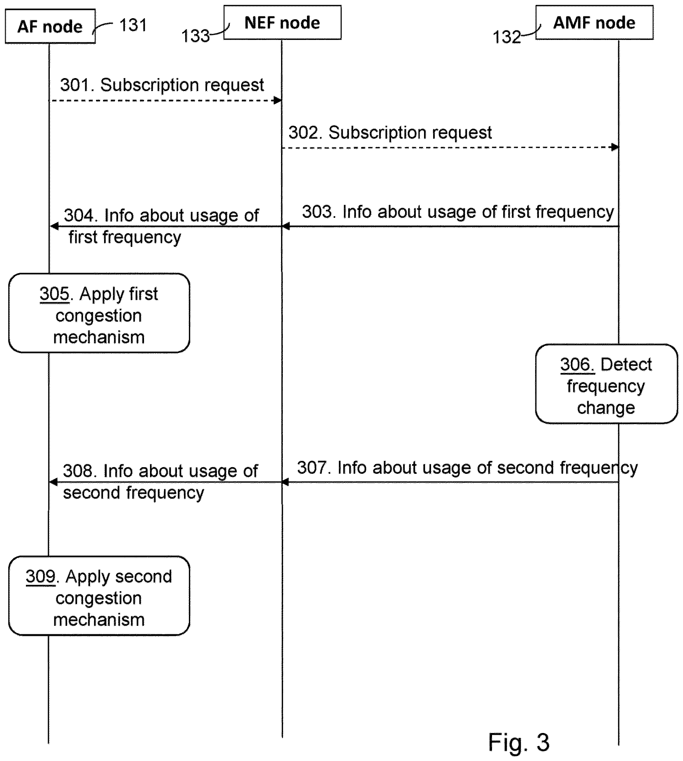

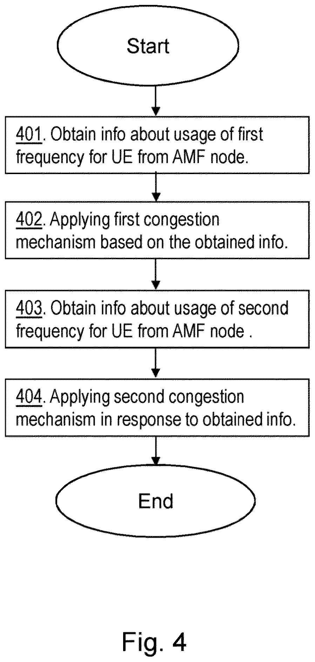

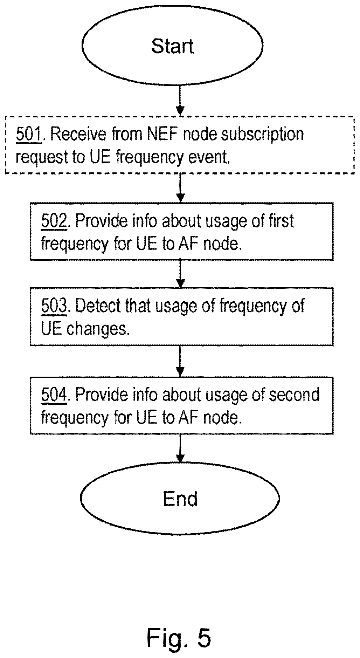

An example of how a data session could be handled for the UE 120 in the communication network 100 will now be described with reference to **Fig. 3****,** thereafter methods will be described from the view of the AF node 131 and AMF node 132 respectively with reference to Figs. 4 and 5. Fig. 3 is a combined signalling scheme and flowchart of a procedure where some embodiments herein are used. The method e.g. comprises the following actions:
**Action 301.** To be able to know what frequency the UE 120 is using, the AF node 131 obtains information about usage of a first frequency for the UE 120 from the AMF node 132. Therefore the AF node 131 transmits, towards the NEF node 133, a subscription request to a UE frequency event. The subscription request comprises a UE identifier and an event identifier. The AF node 131 transmits the subscription request to the NEF node 133 because the AF node 131 and the AMF node 132 may communicate with each other via the NEF node 133.
**Action 302.** The NEF node 133 thus receives the subscription request to the UE frequency event from the AF node 131 and transmits the subscription request towards the AMF node 132.
**Action 303.** The AMF node 132 receives the subscription request to the UE frequency event from the NEF node 133. As the AF node now subscribes to the UE frequency, the AMF node 132 then provides information about usage of the first frequency for the UE 120 to the AF node 131. As the AF node 131 and AMF node 132 communicate via the NEF node 133, the AMF node 132 transmits, towards the NEF node 133, information about usage of the first frequency for the UE 120.
**Action 304.** The NEF node 133 receives the information about usage of the first frequency for the UE 120 from the AMF node 132 and transmits the received information about usage of the first frequency for the UE 120 towards the AF node 131.
**Action 305.** As the AF node 131 now has obtained the information about usage of the first frequency for the UE 120, the AF node 131 thus knows what frequency the UE 120 is using. The AF node then applies a first congestion mechanism based on the obtained information about usage of the first frequency.
**Action 306.** The AMF node 132 then detects that usage of the frequency of the UE 120 changes. Such changes may e.g. be due to availability and/or unavailability of frequencies or due to that certain applications in the UE 120 may need higher frequencies to have more bandwidth. The frequency used by the UE 120 is typically controlled by a radio scheduling function in the network which may change the UE's frequency usage for whatever reason.
**Action 307.** When the AMF node 133 has detected that the frequency of the UE 120 has changed, the AMF node 132 provides the changed UE frequency, e.g. the information about usage of a second frequency for the UE to the AF node 131. Again, as explained above, as the AMF node 132 and the AF node 131 communicate via the NEF node 133, the AMF node transmits the information about usage of the second frequency for the UE 120 towards the NEF node 133.
**Action 308.** The NEF node 133 receives the information about usage of the second frequency for the UE 120 from the AMF node 132 and then transmits this information to the AF node 131.
**Action 309.** The AF node 131 now has obtained information about usage of the second frequency for the UE 120 from the AMF node 132 and thus applies a second congestion mechanism in response to the obtained information.

Example embodiments of a method performed by the AF node 131 for handling the data session for the UE 120 in the communication network 100 will now be described with reference to a flowchart depicted in **Fig. 4****.** The method comprises the following actions, which actions may be taken in any suitable order.

### Action 401

The AF node 131 obtains information about usage of the first frequency for the UE 120 from the AMF node 132. The AF node 131 and the AMF node 132 may communicate via the NEF node 133. The obtaining information about usage of the first frequency may comprise transmitting, towards the NEF node 133, the subscription request to the UE frequency event, and receiving, from the NEF node 133, information about usage of the first frequency for the UE 120. The subscription request may comprise the UE identifier and the event identifier. This action corresponds to the above actions 301 and 304.

### Action 402

The AF node 131 then applies the first congestion mechanism based on the obtained information about usage of the first frequency. This action corresponds to the above action 305.

### Action 403

The AF node 131 obtains information about usage of the second frequency for the UE 120 from the AMF node 132. The obtaining information about usage of the second frequency for the UE 120 may comprise receiving, from the NEF node 133, information about usage of the second frequency for the UE 120. This action corresponds to the above action 308.

### Action 404

The AF node 131 then applies the second congestion mechanism in response to the obtained information about usage of the second frequency. This action corresponds to the above action 309.

Example embodiments of a method performed by the AMF node 132 for handling the data session for the UE 120 in the communication network 100 will now be described with reference to a flowchart depicted in **Figure 5****.** The method comprises the following actions, which actions may be taken in any suitable order.

### Action 501

The AMF node 132 may receive, from the NEF node 133, a subscription request to a UE frequency event. The subscription request may comprise the UE identifier and the event identifier. This action corresponds to the above action 302.

### Action 502

The AMF node 132 provides information about usage of the first frequency for the UE 120 to the AF node 131. As mentioned before, the AF node 131 and the AMF node 132 may communicate via the NEF node 133. The providing information about usage of the first frequency may comprise transmitting, towards the NEF node 133, information about usage of the first frequency for the UE 120. This action corresponds to the above action 303 and 304.

### Action 503

The AMF node 132 detects that usage of the frequency of the UE 120 changes. This action corresponds to the action 306.

### Action 504

The AMF node 132 provides information about usage of the second frequency for the UE 120 to the AF node 131. The providing information about usage of the second frequency may comprise transmitting, towards the NEF node 133, information about usage of the second frequency for the UE 120. This action corresponds to the above action 307 and 308.

Embodiments herein such as mentioned above will now be further described and exemplified. The text below is applicable to and may be combined with any suitable embodiment described above.

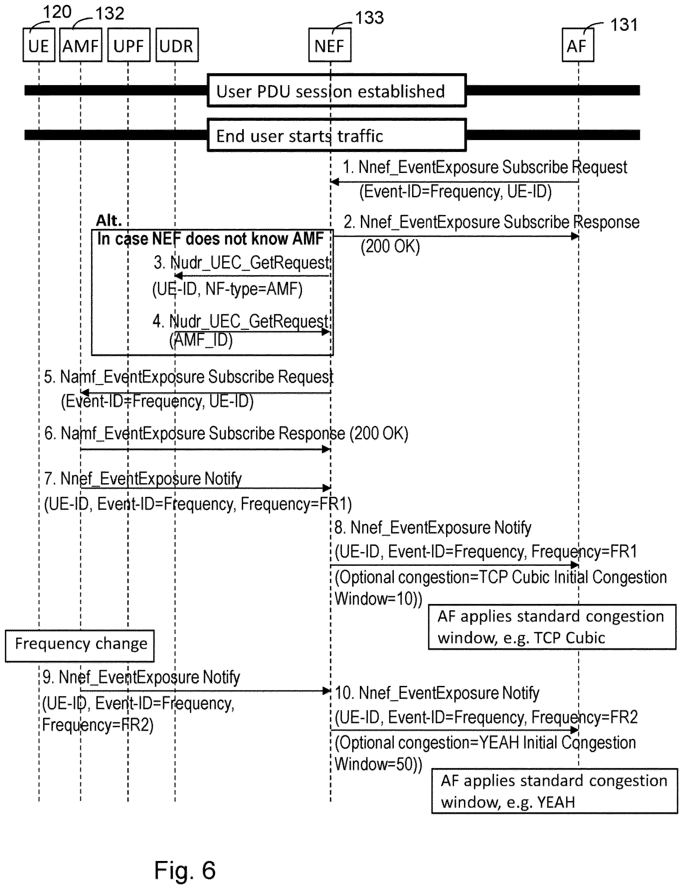

An, example of a method according to some embodiments, is shown in the combined signalling scheme and flowchart of **Fig 6.** Fig. 6 illustrates the example where the AF node 131 subscribes to the UE frequency event and comprises the steps 1-10 where the order of the steps may vary in different implementations:
Preconditions: The UE 120 has a PDU session already established. A single UE 120 is shown for the sake of simplicity.

**Step 1.** The AF node 131 which may be a content provider such as e.g. Vimeo, may subscribe to the UE frequency. In order to do so, it triggers a Nnef_AnalyticsExposure Subscribe (HTTP POST) message including the following information:
- The identifier of the (new) Analytic of interest, e.g. Analytic-ID=UE frequency.
- The identifier of the UE 120, e.g. UE-ID. The subscription may relate to a single UE, a group of UEs.

The AF node 131 subscribes to changes of the frequency of the UE 120, e.g. the subscriber's frequency. The AF node 131 has different congestion schemes according to the frequency of the UE 120. One congestion window for FR1 and for FR2, as was shown in Table 1 above.

**Step 2.** The NEF node 133 may answer the AF node 131 with a Nnef_AnalyticsExposure 200 OK message.

**Step 3-4.** Optionally, in case the NEF node 132 does not know the AMF node 132 to which the UE 120 is attached, the NEF node 133 can request for the AMF node 131 from a Unified Data Repository (UDR). The UDR is a converged repository of subscriber information and can be used to service a number of network functions. The UDR may then respond with the AMF node 132.

**Step 5.** The NEF node may subscribe to changes of frequency in the AMF node 132 using the Namf_EventExposureService with an event called Frequency. The AMF node 132 may provide a new event to be provided by Namf_EventExposure Service.

The definition of this event is the following:
Event: Frequency

A Network Function (NF) may subscribe to the event Frequency to receive the event report of a UE or group of UEs when an AMF detects that a target UE has changed the frequency, by default the so-called arfcnDL parameter in accordance with 3GPP TS 28.541.
UE Type: One UE, Group of UEs.
Report Type: One-Time Report, Continuous Report
Input: UE ID(s). Optionally: NG-RAN node, or RRU, N3IWF, UE-IP
Notification: UE-ID, frequency band e.g. FR1, FR2 or values provided by arfcnDL Parameter. Optionally the recommended congestion control mechanism with some parameters may be provided.

**Step 6.** The AMF node 132 may answer to the NEF node 133 e.g. with frequency band FR1, FR2 or values provided by arfcnDL.

**Step 7.** The AMF node 132 notifies the frequency of the UE 120. In this example in Fig 6 the frequency of the UE120 is FR1, not mmWave.

**Step 8.** The NEF node 133 may notify the AF node 132 of the UE identifier, e.g. UE-ID, and the frequency band of the UE 120. Optionally, the NEF node 133 may provide a recommended congestion window with some parameters. In this particular case, the congestion mechanism TCP cubic with an initial congestion window = 10. The AF may apply the TCP Cubic congestion mechanism due to that the UE 120 is using this frequency.

**Step 9.** The UE 120 enters in a zone where high frequency, such as mmWave, is provided or the radio network provides a higher frequency, so the UE 120 changes from FR1 to FR 2 frequency. The AMF node 132 notifies to NEF node 133 of the new frequency of the UE 120. In this example it is FR2.

**Step 10.** The NEF node 133 may notify the AF node 131 of the frequency band of the UE 120. Optionally, the NEF node 133 can provide the best recommended congestion window with some parameters. In this particular case, the congestion mechanism Yeah with an initial congestion window = r0. The AF node 131 may apply, e.g. the congestion mechanism Yeah, due to that the UE 120 is using this frequency band. The Yeah congestion mechanism is used as it may be better in mmWave scenarios.

The AMF node 132 may send information about those events to the UPF node 134 so that the UPF node can apply corresponding optimizations based on this information.

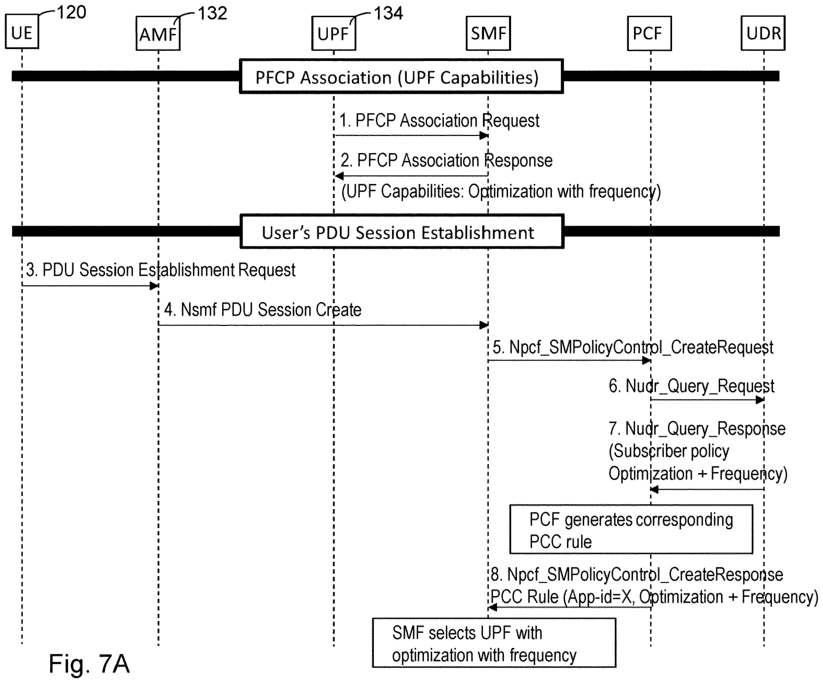

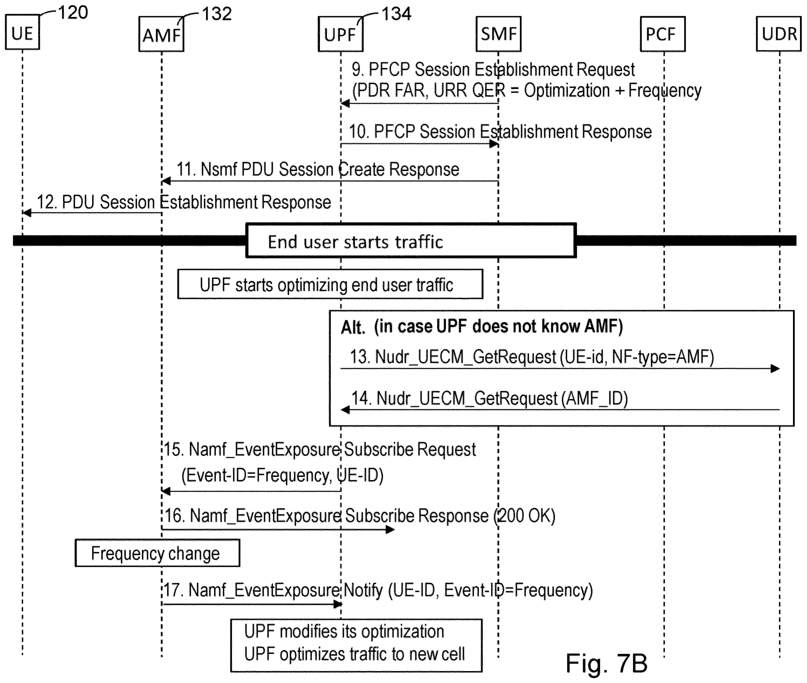

Another example according to some embodiments is shown in the combined signalling scheme and flowchart in **Figs. 7B** **and** **7A****,** where Fig. 7B is a continuation of Fig. 7A. Fig. 7A and 7B concern a case where the UPF node 134 subscribes to a UE frequency event and comprises the steps as described below. Fig. 7A and 7B comprise the steps 1-17 where the order of the steps may vary in different implementations.

Precondition: An optimization information storage/retrieval policy may be pre-configured in the UDR as subscriber policy data, e.g. UE 120 policy data. This example shows per subscriber policies, but this flow information storage policy may also be applied to a certain application, to a group of UEs, e.g. subscribers, to a certain network slice or globally e.g. on a per node or network basis. In this example the behaviour in case handover occurs in a traffic optimization, is shown.

**Steps 1-2.** At a Packet Forwarding Control Protocol (PFCP) Association procedure between UPF and SMF entities, it is proposed to extend the existing mechanism to report UPF capabilities with a new capability Frequency Information for Optimization (FIOP), see Table 2 below in bold).

**Table 2: UP Function Features**

| **Feature Octet / Bit** | **Feature** | **Interface** | **Description** |
|---|---|---|---|
| 5/1 | BUCP | Sxa, N4 | Downlink Data Buffering in CP function is supported by the UP function. |
| 5/2 | DDND | Sxa, N4 | The buffering parameter 'Downlink Data Notification Delay' is supported by the UP function. |
| 5/3 | DLBD | Sxa, N4 | The buffering parameter 'DL Buffering Duration' is supported by the UP function. |
| 5/4 | TRST | Sxb, Sxc, N4 | Traffic Steering is supported by the UP function. |
| 5/5 | FTUP | Sxa, Sxb, N4 | F-TEID allocation / release in the UP function is supported by the UP function. |
| 5/6 | PFDM | Sxb, Sxc, N4 | The PFD Management procedure is supported by the UP function. |
| 5/7 | HEEU | Sxb, Sxc, N4 | Header Enrichment of Uplink traffic is supported by the UP function. |
| 5/8 | TREU | Sxb, Sxc, N4 | Traffic Redirection Enforcement in the UP function is supported by the UP function. |
| 6/1 | EMPU | Sxa, Sxb, N4 | Sending of End Marker packets supported by the UP function. |
| 6/2 | PDIU | Sxa, Sxb, Sxc, N4 | Support of PDI optimised signalling in UP function (see clause 5.2.1A.2). |
| 6/3 | UDBC | Sxb, Sxc, N4 | Support of UL/DL Buffering Control |
| 6/4 | QUOAC | Sxb, Sxc, N4 | The UP function supports being provisioned with the Quota Action to apply when reaching quotas. |
| 6/5 | TRACE | Sxa, Sxb, Sxc, N4 | The UP function supports Trace (see clause 5.15). |
| 6/6 | FRRT | Sxb, N4 | The UP function supports Framed Routing (see IETF RFC 2865 [37] and IETF RFC 3162 [38]). |
| 6/7 | PFDE | Sxb, N4 | The UP function supports a PFD Contents including a property with multiple values. |
| 6/8 | EPFAR | Sxa, Sxb, Sxc, N4 | The UP function supports the Enhanced PFCP Association Release feature (see clause 5.18). |
| 7/1 | DPDRA | Sxb, Sxc, N4 | The UP function supports Deferred PDR Activation or Deactivation. |
| 7/2 | ADPDP | Sxa, Sxb, Sxc, N4 | The UP function supports the Activation and Deactivation of Pre-defined PDRs (see clause 5.19). |
| 7/3 | UEIP | N4 | The UPF supports allocating UE IP addresses or prefixes (see clause 5.21). |
| 7/4 | SSET | N4 | UPF support of PFCP sessions successively controlled by different SMFs of a same SMF Set (see clause 5.22). |
| 7/5 | MNOP | Sxa, Sxb, Sxc, N4 | UPF supports measurement of number of packets which is instructed with the flag 'Measurement of Number of Packets' in a URR. See also 5.2.2.2.1. |
| 7/6 | MTE | N4 | UPF supports multiple instances of Traffic Endpoint IDs in a PDI. |
| 7/7 | BUNDL | Sxa, Sxb, Sxc, N4 | PFCP messages bunding (see clause 6.5) is supported by the UP function. |
| 7/8 | GCOM | N4 | UPF support of 5G VN Group Communication. (See clause 5.23) |
| 8/1 | MPAS | N4 | UPF support for multiple PFCP associations to the SMFs in an SMF set (see clause 5.22.3). |
| 8/2 | RTTL | N4 | The UP function supports redundant transmission at transport layer. |
| 8/3 | VTIME | Sxb, N4 | UPF support of quota validity time feature. |
| **8/4** | **FIOP** | **Sxb, Sxc, N4** | **Frequency Information Optimization. UPF gets information of frequency and optimizes flows or not considering frequency of the subscriber.** |

**Step 3.** The UE 120 may trigger a PDU session establishment, by means of sending a PDU Session Establishment Request to the AMF node 132.

**Step 4.** The AMF node 132 may select an SMF to manage the PDU session, the SMF selection function in the AMF node 132 selects an SMF instance based on the available SMF instances obtained from NRF or on the configured SMF information in the AMF node 132, and triggers a Nsmf PDU Session Create message.

**Step 5.** The SMF may trigger an Npcf_SMPolicyControl_Create Request message to retrieve Session Management (SM) policies for the user PDU session.

**Step 6)** The PCF triggers a so-called Nudr_Query Request message, including a subscriber identifier, e.g. UE identifier, to retrieve the policy data for the UE's 120 PDU session.

**Step 7.** The UDR answers with a Nudr_Query Response message, including the Subscriber Policy Data, which includes a new handover information for optimization policies. As an example, a binary flag as handover information policies may be assumed:
- TRUE: Track frequency for optimization
- FALSE: No consider frequency

This value may be extended with more granular information in case it is needed to check frequency at other levels such as Radio Resource Unit (RRU) set of NG-RAN nodes, etc.

In Figs. 7A and 7B it may be assumed that optimization will be performed at the UPF node 134. This example also assumes the optimization with frequency information policy applied on a per subscriber's PDU session basis. It is also possible to configure different optimization with frequency information policies for each application.

**Step 8.** The PCF may generate the corresponding PCC rule/s based on Subscriber Policy Data, and may also include the optimization with handover information (TRUE), which in this example applies on a per PDU session basis.

**Step 9.** The SMF may select the UPF and triggers a PFCP Session Establishment procedure towards the UPF to provision Packet Detection Rules (PDRs), and the corresponding enforcement actions: QoS Enforcement Rule (QER) Forwarding Action Rules (FARs), Usage Reporting Rules (URRs), etc., for the PDU session. Specifically, the SMF may provision the handover information. In order to do this, it is proposed to extend the PFCP protocol by adding a new "Frequency Information" IE at "PFCP Session Establishment/Modification Request", as shown in Table 3 and Table 4 below in bold:

**Table 3: Create QER IE within PFCP Session Establishment Request**

| Octet 1 and 2 | Create QER IE Type = 7 (decimal) | | | | | | | |
|---|---|---|---|---|---|---|---|---|
| Octets 3 and 4 | Length = n | | | | | | | |
| **Information elements** | **P** | **Condition / Comment** | | **Appl.** | | | | **IE Type** |
| | | | | **Sx a** | **Sx b** | **Sx c** | **N4** | |
| QER ID | M | This IE shall uniquely identify the QER among all the QER configured for that PFCP session | | - | X | X | X | QER ID |
| QER Correlation ID | C | This IE shall be present if the UP function is required to correlate the QERs of several PFCP sessions, forAPN-AMBR enforcement of multiple UE's PDN connections to the same APN. | | - | X | | X | QER Correlation ID |
| Gate Status | M | This IE shall indicate whether the packets are allowed to be forwarded (the gate is open) or shall be discarded (the gate is closed) in the uplink and/or downlink directions. | | - | X | X | X | Gate Status |
| Maximum Bitrate | C | This IE shall be present if an MBR enforcement action shall be applied to packets matching this PDR. When present, this IE shall indicate the uplink and/or downlink maximum bit rate to be enforced for packets matching the PDR. | | - | X | X | X | |
| | | For EPC, this IE may be set to the value of: | | | | | | |
| | | | - the APN-AMBR, for a QER that is referenced by all the PDRs of the non-GBR bearers of a PDN connection; | | | | | |
| | | | - the TDF session MBR, for a QER that is referenced by all the PDRs of a TDF session; | | | | | |
| | | | - the bearer MBR, for a QER that is referenced by all the PDRs of a bearer; | | | | | MBR |
| | | | - the SDF MBR, for a QER that is referenced by all the PDRs of a SDF. | | | | | |
| | | For 5GC, this IE may be set to the value of: | | | | | | |
| | | | - the Session-AMBR, for a QER that is referenced by all the PDRs of the non-GBR QoS flows of a PDU session; | | | | | |
| | | | - the QoS Flow MBR, for a QER that is referenced by all the PDRs of a QoS Flow; | | | | | |
| | | | - the SDF MBR, for a QER that is referenced by all the PDRs of a SDF. | | | | | |
| Guaranteed Bitrate | C | This IE shall be present if a GBR has been authorized to packets matching this PDR. When present, this IE shall indicate the authorized uplink and/or downlink guaranteed bit rate. | | - | X | X | X | |
| | | This IE may be set to the value of: | | | | | | |
| | | | - the aggregate GBR, for a QER that is referenced by all the PDRs of a GBR bearer; | | | | | GBR |
| | | | - the QoS Flow GBR, for a QER that is referenced by all the PDRs of a QoS Flow (for 5GC); | | | | | |
| | | | - the SDF GBR, for a QER that is referenced by all the PDRs of a SDF. | | | | | |
| Packet Rate | C | This IE shall be present if a Packet Rate enforcement action (in terms of number of packets per time interval) shall be applied to packets matching this PDR. | | - | X | - | - | Packet Rate |
| | | When present, this IE shall indicate the uplink and/or downlink maximum packet rate to be enforced for packets matching the PDR. | | | | | | |
| | | This IE may be set to the value of: | | | | | | |
| | | | - downlink packet rate for Serving PLMN Rate Control, for a QER that is referenced by all PDRs of the UE belonging to the PDN connection using CloT EPS Optimizations as described in 3GPP TS 23.401 [2]); | | | | | |
| | | | - uplink and/or downlink packet rate for APN Rate Control, for a QER that is referenced by all the PDRs of the UE belonging to PDN connections to the same APN using CioT EPS Optimizations as described in 3GPP TS 23.401 [2]). | | | | | |
| DL Flow Level Marking | C | This IE shall be set if the UP function is required to mark the packets for QoS purposes: | | - | X | X | - | DL Flow Level Marking |
| | | | - by the TDF-C, for DL flow level marking for application indication (see clause 5.4.5); | | | | | |
| | | | - by the PGW-C, for setting the GTP-U Service Class Indicator extension header for service indication towards GERAN (see clause 5.4.12). | | | | | |
| QoS flow identifier | C | This IE shall be present if the QoS flow identifier shall be inserted by the UPF. | | - | - | - | X | QFI |
| Reflective QoS | C | This IE shall be present if the UP function is required to insert a Reflective QoS Identifier to request reflective QoS for uplink traffic. | | - | - | - | X | RQI |
| Paging Policy Indicator | C | This IE shall be present if the UPF is required to set the Paging Policy Indicator (PPI) in outgoing packets (see clause 5.4.3.2 of 3GPP TS 23.501 [28]). | | - | - | - | X | Paging Policy Indicator |
| | | When present, it shall be set to the PPI value to set. | | | | | | |
| Averaging Window | O | This IE may be present if the UP function is required to use a different Averaging window than the default one. (NOTE) | | - | - | - | X | Averaging Window |
| **Frequency Information** | **O** | **This IE may be present if the UPF function is required to modify its behaviour in case of frequency modification** | | **-** | **-** | **-** | **X** | **Frequency Information** |
| NOTE: As 5QI is not signalled over N4, one default averaging window shall be pre-configured in the UPF. | | | | | | | | |

**Table 4: Frequency Information IE**

| Octet 1 and 2 | Usage Report IE Type = 80 (decimal) | | |
|---|---|---|---|
| Octets 3 and 4 | Length = n | | |
| **Information elements** | **P** | **Condition / Comment** | **IE Type** |
| **Frequency Information Profile** | **C** | **The name of the Frequency Information profile.** | **Frequency Information Profile** |

In this example:
- Frequency Information Profile=FR1

There may be similar attributes for a session modification message.

**Step 11.** The SMF answers to the AMF node 132 request.

**Step 12.** The UE 120 has a PDU session established.

**Steps 13-14.** Optionally, in case the UPF node 134 does not know the AMF node 132 to which the UE 120 is attached, the UPF node 134 may ask for the AMF node 132 from the UDR. The UDR may then answer with the AMF node 132.

**Step 15.** The UPF node 134 may subscribe to the Namf_EventExposure Service. In this case, a new event is exposed with this service. It is the handover of cells performed by the UE 120. The definition of this event is the following:
The AMF node 132 may provide a new event to be provided by Namf_EventExposure Service.

### Event: Frequency

An NF subscribes to this event to receive the event report of a UE or group of UEs when the AMF node 132 detects that a target UE has changed the frequency, by default the arfcnDL parameter, as described in 3GPP TS 28.541.
UE Type: One UE, Group of UEs.
Report Type: One-Time Report, Continuous Report.
Input: UE ID(s). Optionally: NG-RAN node, or RRU, N3IWF, UE-IP.
Notification; UE-ID, Frequency (FR1, FR2 or values provided by arfcnDL Parameter)

**Step 16.** The AMF node 132 may confirm that the subscription is correct.

**Step 17.** The AMF may notify that the UE 120 has changed the frequency, using the Namf_EventExposure Service. The UPF node 134 may adapt its optimization to this UE 120 based on this information, such as e.g. modifying its buffer size or changing parameters in the AQM algorithm.

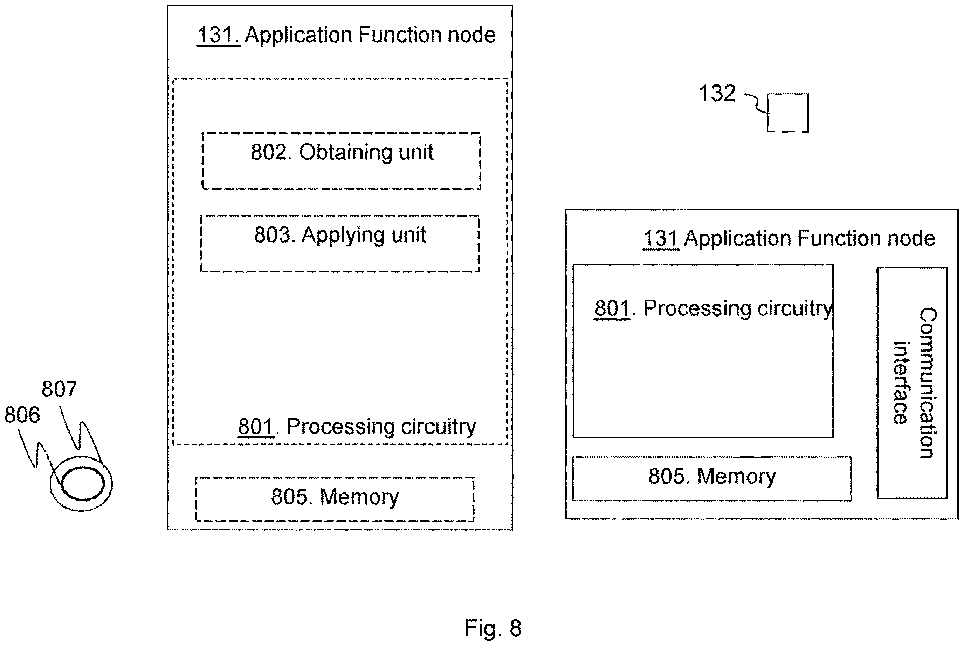

**Fig. 8** is a block diagram depicting the AF node 131 for handling the data session for the UE 120 in the communication network 100, according to embodiments herein.

The AF node 131 may comprise **processing circuitry 801,** e.g. one or more processors, configured to perform the methods herein.

The AF node 131 may comprise an **obtaining unit 802.** The AF node 131, the processing circuitry 801, and/or the obtaining unit 802 is configured to obtain information about usage of the first frequency for the UE 120 from the AMF node 132.

The AF node 131 and the AMF node 132 may communicate via the NEF node 133.

The obtaining information about usage of the first frequency may be adapted to comprise to transmit, towards the NEF node 133, the subscription request to the UE frequency event, wherein the subscription request comprises the UE identifier and the event identifier, and to receive, from the NEF node 133, information about usage of the first frequency for the UE 120.

The AF node 131, the processing circuitry 801, and/or the obtaining unit 802 is configured to obtain information about usage of the second frequency for the UE 120 from the AMF node 132. The obtaining information about usage of the second frequency for the UE 120 may be adapted to comprise to receive, from the NEF node 133, information about usage of the second frequency for the UE 120.

The AF node 131 may comprise an **applying unit 803.** The AF node 131, the processing circuitry 801, and/or the applying unit 803 is configured to apply the first congestion mechanism based on the obtained information about usage of the first frequency of the UE 120.

The AF node 131, the processing circuitry 801, and/or the applying unit 803 is configured to apply the second congestion mechanism in response to the obtained information about usage of the second frequency of the UE 120.

The AF node 131 further comprises **a memory 805.** The memory 805 comprises one or more units to be used to store data on, such as frequency information, UE identifier and event identifier information, input/output data, metadata, etc. and applications to perform the methods disclosed herein when being executed, and similar. The AF node 131 may further comprise a communication interface comprising e.g. one or more antenna or antenna elements.

The methods according to the embodiments described herein for the AF node 131 are respectively implemented by means of e.g. **a computer program product 806** or a computer program, comprising instructions, i.e., software code portions, which, when executed on at least one processor, cause the at least one processor to carry out the actions described herein, as performed by the AF node 131. The computer program product 806 may be stored on **a computer-readable storage medium 807,** e.g. a disc, a universal serial bus (USB) stick or similar. The computer-readable storage medium 807, having stored thereon the computer program product, may comprise the instructions which, when executed on at least one processor, cause the at least one processor to carry out the actions described herein, as performed by the AF node 131. In some embodiments, the computer-readable storage medium may be a transitory or a non-transitory computer-readable storage medium.

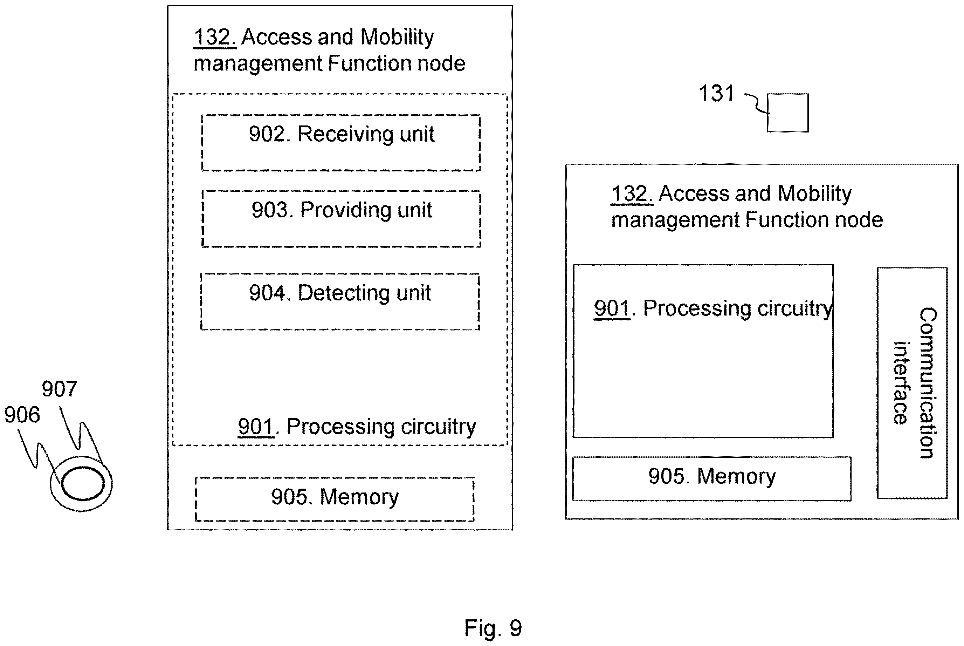

**Fig. 9** is a block diagram depicting the AMF node 132 for handling the data session for the UE 120 in the communication network 100, according to embodiments herein.

The AMF node 132 may comprise **processing circuitry 901,** e.g. one or more processors, configured to perform the methods herein.

The AMF node 132 may comprise a **receiving unit 902.** The AMF node 132, the processing circuitry 901, and/or the receiving unit 902 may be configured to receive from the NEF node 133, the subscription request to the UE frequency event, wherein the subscription request comprises the UE identifier and the event identifier.

The AMF node 132 may comprise a **providing unit 903.** The AMF node 132, the processing circuitry 901, and/or the providing unit 903 is configured to provide information about usage of the first frequency for the UE to the AF node 131.

The AF node 131 and the AMF node 132 may communicate via the NEF node 133.

The providing information about usage of the first frequency may be adapted to comprise to transmit, towards the NEF node 133, information about usage of the first frequency.

The AMF node 132, the processing circuitry 901, and/or the providing unit 903 is configured to provide information about usage of the second frequency for the UE 120 to the AF node 131. The providing information about usage of the second frequency may be adapted to comprise to transmit, towards the NEF node 133, information about usage of the second frequency.

The AMF node 132 may comprise a **detecting unit 904.** The AMF node 132, the processing circuitry 901, and/or the detecting unit 904 is configured to detect that usage of the frequency of the UE 120 changes.

The AMF node 132 further comprises **a memory 905.** The memory 905 comprises one or more units to be used to store data on, such as frequency information, UE identifier and event identifier information, input/output data, metadata, etc. and applications to perform the methods disclosed herein when being executed, and similar. The AMF node 132 may further comprise a communication interface comprising e.g. one or more antenna or antenna elements.

The methods according to the embodiments described herein for the AMF node 132 are respectively implemented by means of e.g. **a computer program product 906** or a computer program, comprising instructions, i.e., software code portions, which, when executed on at least one processor, cause the at least one processor to carry out the actions described herein, as performed by the AMF node 132. The computer program product 906 may be stored on **a computer-readable storage medium 907,** e.g. a disc, a universal serial bus (USB) stick or similar. The computer-readable storage medium 907, having stored thereon the computer program product, may comprise the instructions which, when executed on at least one processor, cause the at least one processor to carry out the actions described herein, as performed by the AMF node 132. In some embodiments, the computer-readable storage medium may be a transitory or a non-transitory computer-readable storage medium.

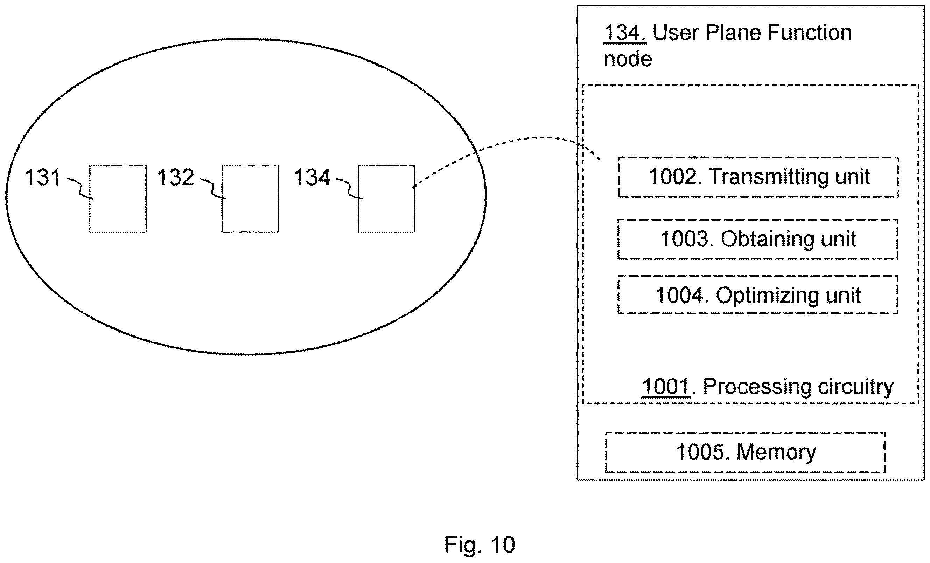

The system for handling a data session for the UE 120 in the communication network 100 is illustrated in **Fig. 10****.** The system may comprise the AF node 131 and the AMF node 132, shown in Fig. 8 and Fig. 9 respectively. The system may also comprise the UPF node 134. The UPF node 134 may comprise **processing circuitry 1001,** e.g. one or more processors, configured to perform the methods herein.

The UPF node 134 may comprise a **transmitting unit 1002.** The UPF node 134, the processing circuitry 1001, and/or the transmitting unit 1002 may be configured to transmit, towards the AMF node 132, a subscription request to a UE frequency event, wherein the subscription request comprises a UE identifier and an event identifier.

The UPF node 134 may comprise an **obtaining unit 1003.** The UPF node 134, the processing circuitry 1001, and/or the obtaining unit 1003 may be configured to obtain, from the AMF node 132, information about usage of the frequency for the UE 120.

The UPF node 134 may comprise an **optimizing unit 1004.** The UPF node 134, the processing circuitry 1001, and/or the optimizing unit 1004 may be configured to optimize UE traffic in accordance with the received information about usage of the frequency for the UE 120.

In some embodiments a more general term "network node" is used and it can correspond to any type of radio-network node or any network node, which communicates with a wireless device and/or with another network node. Examples of network nodes are gNodeB, eNodeB, NodeB, MeNB, SeNB, a network node belonging to Master cell group (MCG) or Secondary cell group (SCG), base station (BS), multi-standard radio (MSR) radio node such as MSR BS, eNodeB, network controller, radio-network controller (RNC), base station controller (BSC), relay, donor node controlling relay, base transceiver station (BTS), access point (AP), transmission points, transmission nodes, Remote radio Unit (RRU), Remote Radio Head (RRH), nodes in distributed antenna system (DAS), etc.

In some embodiments the non-limiting term wireless device or user equipment (UE) is used and it refers to any type of wireless device communicating with a network node and/or with another wireless device in a cellular or mobile communication system. Examples of UE are target device, device to device (D2D) UE, proximity capable UE (aka ProSe UE), machine type UE or UE capable of machine to machine (M2M) communication, Tablet, mobile terminals, smart phone, laptop embedded equipped (LEE), laptop mounted equipment (LME), USB dongles etc.

Embodiments are applicable to any radio access technology (RAT) or multi-RAT systems, where the devices receives and/or transmit signals, e.g. data, such as New Radio (NR), Wi-Fi, Long Term Evolution (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

As will be readily understood by those familiar with communications design, that functions means or circuits may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a UE or network node, for example.

Alternatively, several of the functional elements of the processing units discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware and/or program or application data. Other hardware, conventional and/or custom, may also be included. Designers of communications devices will appreciate the cost, performance, and maintenance trade-offs inherent in these design choices.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims and their legal equivalents.

### Further Extensions and Variations

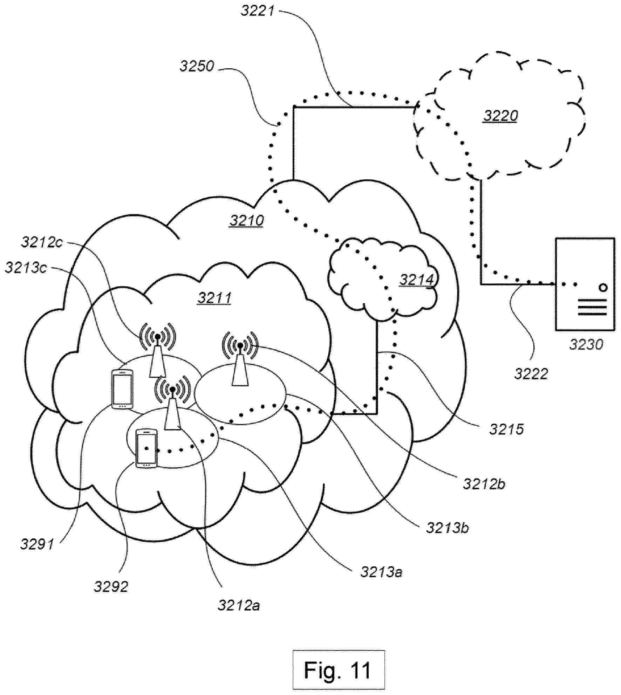

With reference to **Figure 11****,** in accordance with an embodiment, a communication system includes a telecommunication network 3210 such as the wireless communications network 100, e.g. a NR network, such as a 3GPP-type cellular network, which comprises an access network 3211, such as a radio access network, and a core network 3214. The access network 3211 comprises a plurality of base stations 3212a, 3212b, 3212c, such as the radio network node 110, access nodes, AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) e.g. the wireless devices 120 such as a Non-AP STA 3291 located in coverage area 3213c is configured to wirelessly connect to, or be paged by, the corresponding base station 3212c. A second UE 3292 e.g. the first or second radio node 110, 120 or such as a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 11 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signalling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

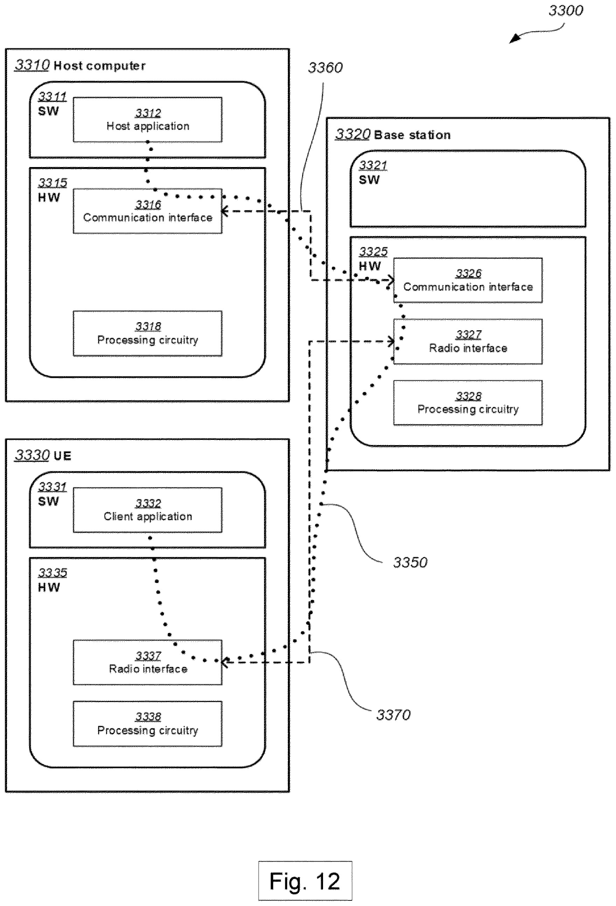

Example implementations, in accordance with an embodiment, of the UE, base station and host computer discussed in the preceding paragraphs will now be described with reference to **Figure 12****.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Figure 12) served by the base station 3320. The communication interface 3326 may be configured to facilitate a connection 3360 to the host computer 3310. The connection 3360 may be direct or it may pass through a core network (not shown in Figure 12) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Figure 12 may be identical to the host computer 3230, one of the base stations 3212a, 3212b, 3212c and one of the UEs 3291, 3292 of Figure 11, respectively. This is to say, the inner workings of these entities may be as shown in Figure 12 and independently, the surrounding network topology may be that of Figure 11.

In Figure 12, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the data rate, latency, and power consumption and thereby provide benefits such as user waiting time, relaxed restriction on file size, better responsiveness, extended battery lifetime.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signalling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

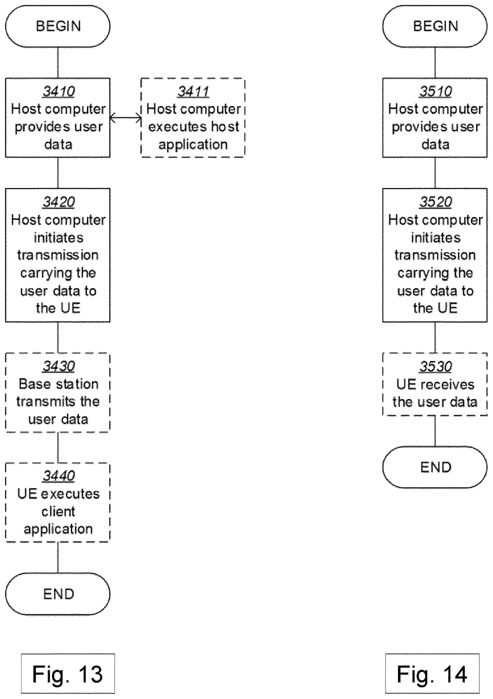

**Figure 13** is a flowchart illustrating a method implemented in a communication system, in accordance with one embodiment. The communication system includes a host computer, a base station such as an AP STA, and a UE such as a Non-AP STA which may be those described with reference to Figure 11 and Figure 12. For simplicity of the present disclosure, only drawing references to Figure 13 will be included in this section. In a first action 3410 of the method, the host computer provides user data. In an optional subaction 3411 of the first action 3410, the host computer provides the user data by executing a host application. In a second action 3420, the host computer initiates a transmission carrying the user data to the UE. In an optional third action 3430, the base station transmits to the UE the user data which was carried in the transmission that the host computer initiated, in accordance with the teachings of the embodiments described throughout this disclosure. In an optional fourth action 3440, the UE executes a client application associated with the host application executed by the host computer.

**Figure 14** is a flowchart illustrating a method implemented in a communication system, in accordance with one embodiment. The communication system includes a host computer, a base station such as an AP STA, and a UE such as a Non-AP STA which may be those described with reference to Figure 11 and Figure 12. For simplicity of the present disclosure, only drawing references to Figure 14 will be included in this section. In a first action 3510 of the method, the host computer provides user data. In an optional subaction (not shown) the host computer provides the user data by executing a host application. In a second action 3520, the host computer initiates a transmission carrying the user data to the UE. The transmission may pass via the base station, in accordance with the teachings of the embodiments described throughout this disclosure. In an optional third action 3530, the UE receives the user data carried in the transmission.

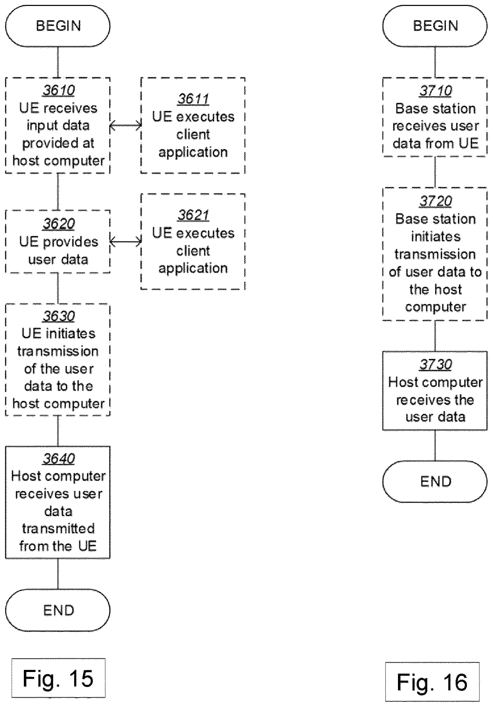

**Figure 15** is a flowchart illustrating a method implemented in a communication system, in accordance with one embodiment. The communication system includes a host computer, a base station such as an AP STA, and a UE such as a Non-AP STA which may be those described with reference to Figure 11 and Figure 12. For simplicity of the present disclosure, only drawing references to Figure 15 will be included in this section. In an optional first action 3610 of the method, the UE receives input data provided by the host computer. Additionally or alternatively, in an optional second action 3620, the UE provides user data. In an optional subaction 3621 of the second action 3620, the UE provides the user data by executing a client application. In a further optional subaction 3611 of the first action 3610, the UE executes a client application which provides the user data in reaction to the received input data provided by the host computer. In providing the user data, the executed client application may further consider user input received from the user. Regardless of the specific manner in which the user data was provided, the UE initiates, in an optional third subaction 3630, transmission of the user data to the host computer. In a fourth action 3640 of the method, the host computer receives the user data transmitted from the UE, in accordance with the teachings of the embodiments described throughout this disclosure.

**Figure 16** is a flowchart illustrating a method implemented in a communication system, in accordance with one embodiment. The communication system includes a host computer, a base station such as an AP STA, and a UE such as a Non-AP STA which may be those described with reference to Figure 11 and Figure 12. For simplicity of the present disclosure, only drawing references to Figure 16 will be included in this section. In an optional first action 3710 of the method, in accordance with the teachings of the embodiments described throughout this disclosure, the base station receives user data from the UE. In an optional second action 3720, the base station initiates transmission of the received user data to the host computer. In a third action 3730, the host computer receives the user data carried in the transmission initiated by the base station.

When using the word "comprise" or "comprising" it shall be interpreted as non-limiting, i.e. meaning "consist at least of".

## Claims

1. A method performed by an Application Function, AF, node (131), for handling a data session for a User Equipment, UE, (120) in a communication network (100), the method comprising:
*obtaining* (401) information about usage of a first frequency for the UE from an Access and Mobility management Function, AMF, node (132);
the method **characterized in**:
*applying* (402) a first congestion mechanism based on the obtained information about usage of the first frequency;
*obtaining* (403) information about usage of a second frequency for the UE from the AMF node (132), wherein the information about usage of the second frequency comprises a detected changed UE frequency; and
*applying* (404) a second congestion mechanism in response to the obtained information about usage of the second frequency.

2. The method according to claim 1, wherein the AF node and the AMF node communicate via a Network Exposure Function, NEF, node (133).

3. The method according to claim 2, wherein the obtaining information about usage of the first frequency comprises transmitting, towards the NEF node (133), a subscription request to a UE frequency event, wherein the subscription request comprises a UE identifier and an event identifier, and receiving, from the NEF node (133), information about usage of the first frequency for the UE.

4. The method according to claim 2 or 3, wherein obtaining information about usage of the second frequency for the UE comprises receiving, from the NEF node (133), information about usage of the second frequency for the UE.

5. A method performed by an Access and Mobility management Function, AMF, node (132), for handling a data session for a User Equipment, UE, (120) in a communication network (100), the method comprising:
*providing* (502) information about usage of a first frequency for the UE to an Application Function, AF, node (131);
the method **characterized in**:
*detecting* (503) that usage of the frequency of the UE changes:
*providing* (504) information about usage of a second frequency for the UE to the AF node (131).

6. The method according to claim 5, wherein the AF node and the AMF node communicate via a Network Exposure Function, NEF, node (133).

7. The method according to claim 6, further comprises:
*receiving* (501) from the NEF node (133), a subscription request to a UE frequency event, wherein the subscription request comprises a UE identifier and an event identifier.

8. The method according to claim 6 or 7, wherein the providing information about usage of the first frequency comprises transmitting, towards the NEF node (133), information about usage of a first frequency for the UE.

9. The method according to any one out of claims 6-8, wherein the providing information about usage of the second frequency comprises transmitting, towards the NEF node (133), information about usage of the second frequency for the UE.

10. An Application Function, AF, node (131), for handling a data session for a User Equipment, UE, (120) in a communication network (100), wherein the AF node is configured to:
obtain information about usage of a first frequency for the UE from an Access and Mobility management Function, AMF, node (132);
apply a first congestion mechanism based on the obtained information about usage of the first frequency for the UE;
obtain information about usage of a second frequency for the UE from the AMF node (132), wherein the information about usage of the second frequency comprises a detected changed UE frequency; and
apply a second congestion mechanism in response to the obtained information about usage of the second frequency of the UE.

11. The AF node (131) according to claim 10, wherein the AF node and the AMF node communicate via a Network Exposure Function, NEF, node (133).

12. An Access and Mobility management Function, AMF, node (132), for handling a data session for a User Equipment, UE, (120) in a communication network (100), wherein the AMF node is configured to:
provide information about usage of a first frequency for the UE to an Application Function, AF, node (131);
detect that usage of the frequency of the UE changes;
provide information about usage of a second frequency for the UE to the AF node (131).

13. The AMF node (132) according to claim 12, wherein the AF node and the AMF node communicate via a Network Exposure Function, NEF, node (133).

14. A system (140) for handling a data session for a User Equipment, UE, (120) in a communication network (100), wherein the system comprises the Application Function, AF, node (131) and the Access and Mobility management Function, AMF, node (132), wherein the AF node is configured according to any of the claims 10-11, and wherein the AMF node is configured according to any of the claims 12-13.

15. The system (140) according to claim 14, wherein the system further comprises a User Plane Function, UPF, node (134) configured to:
transmit, towards the AMF node (132), a subscription request to a UE frequency event, wherein the subscription request comprises a UE identifier and an event identifier;
obtain, from the AMF node (132), information about usage of the frequency for the UE;
optimize UE traffic in accordance with the received information about usage of the frequency for the UE.

## Patentansprüche

1. Von einem Anwendungsfunktions-, AF-, Knoten (131) durchgeführtes Verfahren zum Handhaben einer Datensitzung für eine Benutzerausrüstung, UE, (120) in einem Kommunikationsnetzwerk (100), wobei das Verfahren Folgendes umfasst:
*Erhalten* (401) von Informationen über die Nutzung einer ersten Frequenz für die UE von einem Zugriffs- und Mobilitätsverwaltungsfunktions-, AMF-, Knoten (132);
wobei das Verfahren **gekennzeichnet ist durch**:
*Anwenden* (402) eines ersten Überlastungsmechanismus basierend auf den erhaltenen Informationen über die Nutzung der ersten Frequenz;
*Erhalten* (403) von Informationen über die Nutzung einer zweiten Frequenz für die UE vom AMF-Knoten (132), wobei die Informationen über die Nutzung der zweiten Frequenz eine erkannte geänderte UE-Frequenz umfassen; und
*Anwenden* (404) eines zweiten Überlastungsmechanismus als Reaktion auf die erhaltenen Informationen über die Nutzung der zweiten Frequenz.

2. Verfahren nach Anspruch 1, wobei der AF-Knoten und der AMF-Knoten über einen Network Exposure Function-, NEF-, Knoten (133) kommunizieren.

3. Verfahren nach Anspruch 2, wobei das Erhalten von Informationen über die Nutzung der ersten Frequenz Senden einer Abonnementanforderung für ein UE-Frequenzereignis an den NEF-Knoten (133) umfasst, wobei die Abonnementanforderung eine UE-Kennung und eine Ereigniskennung und Empfangen von Informationen über die Nutzung der ersten Frequenz für die UE vom NEF-Knoten (133) umfasst.

4. Verfahren nach Anspruch 2 oder 3, wobei das Erhalten von Informationen über die Nutzung der zweiten Frequenz für die UE Empfangen von Informationen über die Nutzung der zweiten Frequenz für die UE vom NEF-Knoten (133) umfasst.

5. Von einem Zugriffs- und Mobilitätsverwaltungsfunktions-, AMF-, Knoten (132) ausgeführtes Verfahren zum Handhaben einer Datensitzung für eine Benutzerausrüstung, UE, (120) in einem Kommunikationsnetzwerk (100), wobei das Verfahren Folgendes umfasst:
*Bereitstellen* (502) von Informationen über die Nutzung einer ersten Frequenz für die UE an einen Anwendungsfunktions-, AF-, Knoten (131);
wobei das Verfahren **gekennzeichnet ist durch**:
*Erkennen* (503), dass sich die Nutzung der Frequenz der UE ändert:
*Bereitstellen* (504) von Informationen über die Nutzung einer zweiten Frequenz für die UE an den AF-Knoten (131).

6. Verfahren nach Anspruch 5, wobei der AF-Knoten und der AMF-Knoten über einen Network Exposure Function-, NEF-, Knoten (133) kommunizieren.

7. Verfahren nach Anspruch 6, das weiter Folgendes umfasst:
*Empfangen* (501) einer Abonnementanforderung für ein UE-Frequenzereignis vom NEF-Knoten (133), wobei die Abonnementanforderung eine UE-Kennung und eine Ereigniskennung umfasst.

8. Verfahren nach Anspruch 6 oder 7, wobei das Bereitstellen von Informationen über die Nutzung der ersten Frequenz Senden von Informationen über die Nutzung einer ersten Frequenz für die UE an den NEF-Knoten (133) umfasst.

9. Verfahren nach einem der Ansprüche 6 bis 8, wobei das Bereitstellen von Informationen über die Nutzung der zweiten Frequenz Senden von Informationen über die Nutzung der zweiten Frequenz für die UE an den NEF-Knoten (133) umfasst.

10. Anwendungsfunktions-, AF-, Knoten (131) zum Handhaben einer Datensitzung für eine Benutzerausrüstung, UE, (120) in einem Kommunikationsnetzwerk (100), wobei der AF-Knoten konfiguriert ist zum:
Erhalten von Informationen über die Nutzung einer ersten Frequenz für die UE von einem Zugriffs- und Mobilitätsverwaltungsfunktions-, AMF-, Knoten (132);
Anwenden eines ersten Überlastungsmechanismus basierend auf den erhaltenen Informationen über die Nutzung der ersten Frequenz für die UE;
Erhalten von Informationen über die Nutzung einer zweiten Frequenz für die UE vom AMF-Knoten (132), wobei die Informationen über die Nutzung der zweiten Frequenz eine erkannte geänderte UE-Frequenz umfassen; und
Anwenden eines zweiten Überlastungsmechanismus als Reaktion auf die erhaltenen Informationen zur Nutzung der zweiten Frequenz der UE.

11. AF-Knoten (131) nach Anspruch 10, wobei der AF-Knoten und der AMF-Knoten über einen Network Exposure Function-, NEF-, Knoten (133) kommunizieren.

12. Zugriffs- und Mobilitätsverwaltungsfunktions-, AMF-, Knoten (132) zum Handhaben einer Datensitzung für eine Benutzerausrüstung, UE, (120) in einem Kommunikationsnetzwerk (100), wobei der AMF-Knoten konfiguriert ist zum:
Bereitstellen von Informationen über die Nutzung einer ersten Frequenz für die UE an einen Anwendungsfunktions-, AF-, Knoten (131);
Erkennen, dass sich die Nutzung der Frequenz der UE ändert;
Bereitstellen von Informationen über die Nutzung einer zweiten Frequenz für die UE an den AF-Knoten (131).

13. AMF-Knoten (132) nach Anspruch 12, wobei der AF-Knoten und der AMF-Knoten über einen Network Exposure Function-, NEF-, Knoten (133) kommunizieren.

14. System (140) zum Handhaben einer Datensitzung für eine Benutzerausrüstung, UE, (120) in einem Kommunikationsnetzwerk (100), wobei das System den Anwendungsfunktions-, AF-, Knoten (131) und den Zugriffs- und Mobilitätsverwaltungsfunktions-, AMF-, Knoten (132) umfasst, wobei der AF-Knoten nach einem der Ansprüche 10-11 konfiguriert ist und wobei der AMF-Knoten nach einem der Ansprüche 12-13 konfiguriert ist.

15. System (140) nach Anspruch 14, wobei das System weiter einen User Plane Function-, UPF- Knoten (134) umfasst, der konfiguriert ist zum:
Senden einer Abonnementanforderung für ein UE-Frequenzereignis an den AMF-Knoten (132), wobei die Abonnementanforderung eine UE-Kennung und eine Ereigniskennung umfasst;
Erhalten von Informationen über die Nutzung der Frequenz für die UE vom AMF-Knoten (132);
Optimieren des UE-Verkehrs entsprechend den empfangenen Informationen über die Nutzung der Frequenz für die UE.

## Revendications

1. Procédé mis en oeuvre par un noeud de fonction d'application, AF (131), pour la gestion d'une session de données pour un Équipement d'utilisateur, UE (120), dans un réseau de communication (100), le procédé comprenant :
*l'obtention* (401) d'informations sur l'utilisation d'une première fréquence pour l'UE à partir d'un noeud de fonction de gestion d'accès et de mobilité, AMF (132) ;
le procédé étant **caractérisé par** :
*l'application* (402) d'un premier mécanisme de congestion basé sur les informations obtenues sur l'utilisation de la première fréquence ;
*l'obtention* (403) d'informations sur l'utilisation d'une seconde fréquence pour l'UE à partir du noeud AMF (132), dans lequel les informations sur l'utilisation de la seconde fréquence comprennent une fréquence UE modifiée détectée ; et
*l'application* (404) d'un second mécanisme de congestion en réponse aux informations obtenues sur l'utilisation de la seconde fréquence.

2. Procédé selon la revendication 1, dans lequel le noeud AF et le noeud AMF communiquent par l'intermédiaire d'un noeud de fonction d'exposition de réseau, NEF (133).

3. Procédé selon la revendication 2, dans lequel l'obtention d'informations sur l'utilisation de la première fréquence comprend la transmission, vers le noeud NEF (133), d'une demande d'abonnement à un événement de fréquence UE, dans lequel la demande d'abonnement comprend un identifiant UE et un identifiant d'événement, et la réception, à partir du noeud NEF (133), d'informations sur l'utilisation de la première fréquence pour l'UE.

4. Procédé selon la revendication 2 ou 3, dans lequel l'obtention d'informations sur l'utilisation de la seconde fréquence pour l'UE comprend la réception, à partir du noeud NEF (133), d'informations sur l'utilisation de la seconde fréquence pour l'UE.

5. Procédé mis en oeuvre par un noeud de fonction de gestion d'accès et de mobilité, AMF (132) pour la gestion d'une session de données pour un Équipement d'utilisateur, UE (120), dans un réseau de communication (100), le procédé comprenant :
*la fourniture* (502) d'informations sur l'utilisation d'une première fréquence pour l'UE à un noeud de fonction d'application, AF (131) ;
le procédé étant **caractérisé par** :
*la détection* (503) que l'utilisation de la fréquence de l'UE change :
*la fourniture* (504) d'informations sur l'utilisation d'une seconde fréquence pour l'UE au noeud AF (131).

6. Procédé selon la revendication 5, dans lequel le noeud AF et le noeud AMF communiquent par l'intermédiaire d'un noeud de fonction d'exposition de réseau, NEF (133).

7. Procédé selon la revendication 6, comprend en outre :
*la réception* (501) à partir du noeud NEF (133) d'une demande d'abonnement à un événement de fréquence UE, dans lequel la demande d'abonnement comprend un identifiant UE et un identifiant d'événement.

8. Procédé selon la revendication 6 ou 7, dans lequel la fourniture d'informations sur l'utilisation de la première fréquence comprend la transmission, vers le noeud NEF (133), d'informations sur l'utilisation d'une première fréquence pour l'UE.

9. Procédé selon l'une quelconque des revendications 6-8, dans lequel la fourniture d'informations sur l'utilisation de la seconde fréquence comprend la transmission, vers le noeud NEF (133), d'informations sur l'utilisation de la seconde fréquence pour l'UE.

10. Noeud de fonction d'application, AF (131), pour la gestion d'une session de données pour un Équipement d'utilisateur, UE (120), dans un réseau de communication (100), dans lequel le noeud AF est configuré pour :
obtenir des informations sur l'utilisation d'une première fréquence pour l'UE à partir d'un noeud de fonction de gestion d'accès et de mobilité, AMF (132) ;
appliquer un premier mécanisme de congestion basé sur les informations obtenues sur l'utilisation de la première fréquence pour l'UE ;
obtenir des informations sur l'utilisation d'une seconde fréquence pour l'UE à partir du noeud AMF (132), dans lequel les informations sur l'utilisation de la seconde fréquence comprennent une fréquence UE modifiée détectée ; et
appliquer un second mécanisme de congestion en réponse aux informations obtenues sur l'utilisation de la seconde fréquence de l'UE.

11. Noeud AF (131) selon la revendication 10, dans lequel le noeud AF et le noeud AMF communiquent par l'intermédiaire d'un noeud de fonction d'exposition de réseau, NEF (133).

12. Noeud de fonction de gestion d'accès et de mobilité, AMF (132), pour gérer une session de données pour un Équipement d'utilisateur, UE (120), dans un réseau de communication (100), dans lequel le noeud AMF est configuré pour :
fournir des informations sur l'utilisation d'une première fréquence pour l'UE à un noeud de fonction d'application, AF (131) ;
détecter que l'utilisation de la fréquence de l'UE change ;
fournir des informations sur l'utilisation d'une seconde fréquence pour l'UE au noeud AF (131).

13. Noeud AMF (132) selon la revendication 12, dans lequel le noeud AF et le noeud AMF communiquent par l'intermédiaire d'un noeud de fonction d'exposition de réseau, NEF (133).

14. Système (140) de gestion d'une session de données pour un Équipement d'utilisateur, UE (120), dans un réseau de communication (100), dans lequel le système comprend le noeud de fonction d'application, AF (131), et le noeud de fonction de gestion d'accès et de mobilité, AMF (132), dans lequel le noeud AF est configuré selon l'une quelconque des revendications 10-11, et dans lequel le noeud AMF est configuré selon l'une quelconque des revendications 12-13.

15. Système (140) selon la revendication 14, dans lequel le système comprend en outre un noeud de fonction de plan utilisateur, UPF (134), configuré pour :
transmettre, vers le noeud AMF (132), une demande d'abonnement à un événement de fréquence UE, dans lequel la demande d'abonnement comprend un identifiant UE et un identifiant d'événement ;
obtenir, à partir du noeud AMF (132), des informations sur l'utilisation de la fréquence pour l'UE ;
optimiser le trafic UE en fonction des informations reçues sur l'utilisation de la fréquence pour l'UE.
